# EUROPÄISCHE PATENTSCHRIFT

(11) **EP 1 799 470 B1**
(45) Veröffentlichungstag und Bekanntmachung des Hinweises auf die Patenterteilung: **22.04.2009**
(21) Anmeldenummer: 05784602.4
(22) Anmeldetag: 08.09.2005
(51) Int. Cl.: B60D 1/62, B62D 53/08

(54) **STECKERKONSOLE EINES AUFLIEGERS**
CONNECTOR BRACKET OF A TRAILER
CONSOLE DE CONNECTEUR POUR SEMI-REMORQUE

(30) Priorität: 16.09.2004 DE 102004044991
(43) Veröffentlichungstag der Anmeldung: 27.06.2007
(73) Patentinhaber: Jost-Werke GmbH, 63263 Neu-Isenburg (DE)
(72) Erfinder: ALGÜERA GALLEGO, José Manuel, 63739 Aschaffenburg (DE); RICHTER, Ernst, Martin, 60316 Frankfurt am Main (DE)
(74) Vertreter: Fuchs
(86) Internationale Anmeldenummer: PCT/EP2005/009645
(87) Internationale Veröffentlichungsnummer: WO 2006/029753

(56) Entgegenhaltungen:
- EP-A- 0 983 932
- GB-A- 2 365 397
- US-A- 5 660 408

## Beschreibung

Die Erfindung betrifft ein Kupplungssystem gemäß der im Oberbegriff des Patentanspruchs 1 stehenden Merkmale.

In der Praxis wird üblicherweise das Zugfahrzeug unter den Auflieger gefahren und dadurch der Königszapfen des Aufliegers mit der Sattelkupplung des Zugfahrzeugs in Eingriff gebracht. Nach diesem mechanischen Verbinden von Zugfahrzeug und Auflieger werden üblicherweise die Versorgungsleitungen des Zugfahrzeugs an entsprechende Anschlüsse des Aufliegers angesteckt, die in einer Versorgungskonsole angeordnet sind. Bei den Versorgungsleitungen handelt es sich sowohl um Kabel für eine elektrische als auch um Druckluftschläuche für eine pneumatische Verbindung von Zugfahrzeug und Auflieger. In besonderen Fällen kann unter dem Oberbegriff Versorgungsleitung auch eine hydraulische Schlauchverbindung verstanden werden.

Auf dem Zugfahrzeug befindet sich auf der Rückseite des Fahrerhauses eine Ablagekonsole, an welche bei Leerfahrten des Zugfahrzeuges der oder die Stecker angesteckt werden können. Eine derartige Ablagekonsole offenbart beispielsweise die US 5,630,728. In räumlicher Nähe zu der Ablagekonsole oder durch die Ablagekonsole selbst sind die Versorgungsleitungen mit dem Zugfahrzeug verbunden. Damit während des Ausschwenkens des vorderen Endes des Aufliegers bei Kurvenfahrten zu beiden Seiten ein in etwa gleicher Vorrat der Versorgungsleitungen bereitsteht, wobei die Versorgungsleitungen üblicherweise als Spiralkabel gefertigt sind, befindet sich die Ablagekonsole meistens in der Fahrzeuglängsachse.

Das Anstecken der Verbindungsleitung(en) an die Versorgungskonsole des Aufliegers erfolgt durch den Fahrer von Hand. Hierzu muss der Fahrer auf das Zugfahrzeug in den freien Bauraum zwischen Auflieger und Fahrerhaus klettern, den Stecker aus der Ablagekonsole entnehmen und an die Versorgungskonsole anschließen. Vor dem Abkuppeln des Aufliegers von dem Zugfahrzeug erfolgt die gleiche Prozedur in umgekehrter Reihenfolge.

Der wesentliche Nachteil besteht in dem hohen Verletzungsrisiko während des Besteigens der Zugmaschine, Um einen Anreiz für die Spediteure zu schaffen, dieses Verletzungsrisiko zu senken, stellen Berufsgenossenschaften, wie beispielsweise die französische CRAM, verbilligte Prämien für Fahrzeuge bereit, auf denen Bewegungen des Fahrers an dem Fahrzeug verringert werden. Darüber hinaus ist jedoch der Bauraum zwischen Fahrerhaus und Auflieger häufig dreckig und nass, so dass der Fahrer nach den Kuppelvorgängen oft verschmutzte und feuchte Kleidung wechseln muss.

In der Vergangenheit gab es auch bereits Bestrebungen, die Versorgungskonsole aus dem freien Bauraum zwischen Zugfahrzeug und Auflieger herauszubewegen. Hierfür weist der Auflieger eine an dessen Vorderseite horizontal ausgerichtete Führungsschiene auf, an welcher eine Versorgungskonsole verschiebbar gelagert ist. An die Versorgungskonsole können Versorgungsleitungen des Zugfahrzeuges angeschlossen werden. Zum Ankuppeln der Versorgungsleitungen besteht die Möglichkeit, die Versorgungskonsole zu einer Seite heranzuziehen und diese daran zu befestigen. Während einer Kurvenfahrt schwingt die Versorgungskonsole auf der Führungsschiene und nimmt bezüglich des Aufliegers eine kurveninnere Position ein. Dieses führte jedoch zu einem unkontrollierten Umherschwenken der Versorgungskonsole, insbesondere bei Kurvenfahrten, wodurch die Versorgungsleitungen mechanisch beansprucht und auch beschädigt wurden.

Die EP 0 983 932 A2 offenbart eine automatisch arbeitende Kupplungsvorrichtung, bei der die zugfahrzeugseitige Kupplungshälfte der Versorgungsleitung mittels einer Stellvorrichtung in Form eines schwenkbaren Armes an eine auf der Vorderseite des Aufliegers angeordnete und quer zur Fahrtrichtung verlaufende Fangschiene übergeben wird. Anschließend wird die zugfahrzeugseitige Kupplungshälfte lateral an der Fangschiene bis in eine Endstellung verfahren und kommt dort mit der aufliegerseitigen zweiten Kupplungshälfte in Eingriff, welche ortsfest im seitlichen Bereich des Aufliegers angeordnet ist. Der schwenkbare Arm der bekannten Vorrichtung umfasst mindestens ein Armteil, welches elektromotorisch sowohl um die Hochachse verschwenkbar als auch in Richtung der Hochachse verschiebbar und längenveränderlich ausgebildet ist.

Aus diesem Grund lag der Erfindung die Aufgabe zugrunde, ein Kupplungssystem für die Versorgungsleitungen bereitzustellen, mit dem ein umständliches Arbeiten zwischen Auflieger und Fahrerhaus der Zugmaschine vermieden wird und gleichzeitig eine hohe Standzeit des Systems erreicht wird.

Die Aufgabe wird erfindungsgemäß mit einem Kupplungssystem gelöst, bei dem die Versorgungskonsole aus einer vorzugsweise verrasteten Fahrstellung im Bereich der Fahrzeuglängsachse in eine Bedienstellung an einer Seite des Aufliegers verfahrbar ist. In der Fahrstellung befindet sich die Versorgungskonsole immer ortsfest in einer mittigen Position im Bereich der Fahrzeuglängsachse und liegt unmittelbar der ebenfalls ortsfesten Anbindung der Versorgungsleitung an dem Zugfahrzeug gegenüber. Hierdurch wird ein zu beiden Seiten gleichweiter Schwenkweg der aufliegerseitig angeschlossenen Versorgungsleitungen bei Kurvenfahrten möglich. Diese Fahrposition entspricht den heutigen üblichen Positionen im Bereich der Fahrzeuglängsachse angeordneter Versorgungskonsolen, verbunden mit dem Nachteil der schlechten Erreichbarkeit für den Fahrer. Für ein An- oder Abkuppeln der Versorgungsleitungen,wird erfindungsgemäß die Versorgungskonsole in eine Bedienstellung verfahren, die auf der Vorderseite des Aufliegers in unmittelbarer Griffweite des seitlich neben dem Zugfahrzeug stehenden Fahrers liegen kann.

Die Bedienstellung sollte aus Sicherheitsgründen auf der verkehrabgewandten Seite des Aufliegers liegen.

Vorteilhafterweise ist die Versorgungskonsole mittels einer Zwangsführung an dem Auflieger gelagert. Diese Zwangsführung kann in unterschiedlichen Ausführungsformen ausgebildet sein.

In einer ersten bevorzugten Ausführungsform umfasst die Zwangsführung ein Schwenklager und einen daran angreifenden Schwenkarm, an dessen Ende die Versorgungskonsole angeordnet ist. Bei dieser Ausführungsform wird die Versorgungskonsole über eine Schwenkbewegung um eine starre Schwenkachse, die durch das Schwenklager gebildet ist, zwischen der Fahrstellung und der Bedienstellung verfahren.

Das Verfahren der Versorgungskonsole kann beispielsweise von Hand vorgenommen werden. Hierfür ist es günstig, an dem Schwenkarm einen Zuggriff anzuordnen, welcher von dem Fahrer auch in der Fahrposition der Versorgungskonsole ergriffen werden kann. Dieses kann dadurch erreicht werden, dass der Zuggriff in der Fahrstellung von einer Seite des Aufliegers greifbar ist.

Um ein definiertes Schwenken der Versorgungskonsole zu erreichen und während des Betriebes Beschädigungen an dem Zuggriff zu vermeiden, sollte der Zuggriff lateral verschiebbar in einer ortfest an dem Auflieger angeordneten Zuggriffführung gelagert sein.

Auch hat es sich als vorteilhaft herausgestellt, den Zuggriff an dem Schwenkarm schwenkbar zu lagern. Dieses ermöglicht eine bequeme Bedienposition für den Fahrer während des Schwenkvorganges, da der Zuggriff von der Rotationsbewegung des Schwenkarmes entkoppelt ist.

Zur körperlichen Entlastung des Fahrers und für ein betriebsicheres Zurückschwenken der Versorgungskonsole aus der Bedienstellung in die Fahrstellung kann an dem Schwenkarm und/oder dem Zuggriff eine ortsfest an dem Auflieger gelagerte Rückholfeder angreifen. Die Rückholfeder wird während des Herausschwenkens der Versorgungskonsole in die Bedienstellung vorgespannt und zieht diese nach dem An- oder Abkuppeln zurück in die Fahrposition.

Zusätzlich oder anstelle der Rückhaltefeder ist es auch möglich, an dem Schwenkarm einen Stellzylinder anzuordnen. In einer vorteilhaften konstruktiven Anordnung greift der Stellzylinder mit seinem ersten Ende schwenkbar an dem Auflieger und mit seinem zweiten Ende schwenkbar an dem Schwenkarm an. Mit Hilfe des Stellzylinders werden die Fahrstellung und die Bedienstellung des Schwenkarmes mit der daran befindlichen Versorgungskonsole manuell durch ein vom Fahrer betätigbares Stellventil oder auch vollständig automatisiert angefahren.

Besonders geringe Einbaumaße ermöglicht eine bevorzugte Ausführungsform der Erfindung, bei der an dem Schwenkarm ein Schwenkantrieb angreift. Hierdurch wird ein Stellzylinder an der zugfahrzeugseitigen Wand des Aufliegers eingespart und anstelle dessen der Schwenkantrieb koaxial um das Schwenklager angeordnet. Der ungünstige Hebelarm des unmittelbar an dem Schwenklager angreifenden Schwenkantriebes spielt dabei eine untergeordnete Rolle, da nur ein verhältnismäßig geringes Drehmoment aufgebracht werden muss.

Bei den vorstehend beschriebenen verschwenkbaren Zwangsführungen können die Versorgungskonsole und/oder der Schwenkarm und/oder das Schwenklager in der Bedienstellung lateral verschiebbar sein. Aufgrund der lateralen Verschiebbarkeit ist es möglich, die Versorgungskonsole in der Bedienstellung noch weiter herauszufahren und damit ein besonders komfortables An- und Abkuppeln der Versorgungsleitungen zu realisieren.

Die Zwangsführung kann jedoch auch ohne einen Schwenkarm ausgeführt sein. In dieser alternativen Ausführungsform der Erfindung umfasst die Zwangsführung mindestens eine Gleitschiene, auf welcher die Versorgungskonsole verschiebbar angeordnet ist.

Die Länge der Gleitschiene sollte sich vorzugsweise aus einem Bereich der Fahrzeuglängsachse bis zu einem seitlichen Bereich des Aufliegers erstrecken.

Bei allen Ausführungsformen ist es vorteilhaft, wenn die Versorgungskonsole und/oder der Schwenkarm mindestens ein erstes Rastelement aufweist, das mit mindestens einem zweiten aufliegerseitigen Rastelement zusammenwirkt. Bei dem ersten Rastelement kann es sich beispielsweise um eine an der Versorgungskonsole ausgeformte Spange handeln, die in der Endposition der Fahrstellung das ortsfest angeordnete zweite Rastelement zumindest teilweise umgreift. Das zweite Rastelement kann beispielsweise als vorstehender Zapfen ausgeformt sein.

Damit die Versorgungsleitungen bei Leerfahrten des Zugfahrzeuges ohne Auflieger nicht unkontrolliert umherpendeln, kann die Ablagekonsole auf dem Zugfahrzeug außermittig angeordnet sein. Unter außermittig wird eine Anbauposition verstanden, in welcher die Stecker ohne weitere Hilfsmittel vom Fahrer angesteckt oder abgenommen werden können, wobei der Fahrer neben dem Zugfahrzeug stehen kann. Vorzugsweise befindet sich die Anbauposition an der Rückwand des Fahrerhauses.

Es ist mitunter jedoch günstiger, die mittig ausgerichtete Ablagekonsole bestehen zu lassen und auf dem Zugfahrzeug außermittig eine zusätzliche Haltekonsole anzuordnen. Unter dem außermittigen Anbringen wird eine Position verstanden, die von einer Seite des Zugfahrzeugs greifbar ist. Mit Hilfe der zusätzlichen Haltekonsole ist es möglich, wahlweise ein Anstecken der Stecker an der mittig angeordneten Ablagekonsole oder an der seitlich angeordneten Haltekonsole vorzunehmen, je nach dem, ob als nächstes ein Auflieger mit einer verfahrbaren Versorgungskonsole oder einer konventionellen ortsfesten Versorgungskonsole von dem Zugfahrzeug aufgesattelt werden soll.

Vorteilhafterweise ist die Fahrstellung und/oder die Bedienstellung mit Sensoren erkennbar. Dieses ist insbesondere dann sinnvoll, wenn das Verfahren der Versorgungskonsole automatisiert vorgenommen und von einer Anzeigevorrichtung im Führerhaus angezeigt werden soll.

Die Erfindung wird anhand der nachfolgenden 13 Zeichnungen näher erläutert. Dabei zeigen die:
- Fig. 1:: eine Seitenansicht auf ein Zugfahrzeug mit angekuppeltem Auflieger;
- Fig. 2:: eine Draufsicht auf ein Zugfahrzeug mit angekuppeltem Auflieger und einer Detailansicht der Ablage- und Versorgungskonsole;
- Fig. 3:: eine Seitenansicht auf ein Zugfahrzeug für Fahrt ohne Auflieger mit an einer Haltekonsole gehängte Stecker;
- Fig. 4:: eine Draufsicht auf ein Zugfahrzeug für Fahrt ohne Auflieger mit an einer Haltekonsole gehängte Stecker;
- Fig. 5:: eine Frontansicht auf einen Auflieger mit einer Zwangsführung gemäß einer ersten Ausführungsform und einer Rückstellfeder in Fahrstellung;
- Fig. 6:: eine Rückansicht auf einen Auflieger mit einer Zwangsführung gemäß einer ersten Ausführungsform in Bedienstellung;
- Fig. 7:: eine Rückansicht auf einen Auflieger mit einer Zwangsführung gemäß einer ersten Ausführungsform und einem Stellzylinder in Fahrstellung;
- Fig. 8:: eine Rückansicht auf einen Auflieger mit einer Zwangsführung gemäß einer ersten Ausführungsform und einem Stellzylinder in Bedienstellung;
- Fig. 9:: eine Ansicht gemäß Fig. 5 mit einer gegenüber dem Schwenkarm lateral verschiebbaren Versorgungskonsole;
- Fig. 10:: eine Ansicht gemäß Fig. 8 mit einer gegenüber dem Schwenkarm lateral verschiebbaren Versorgungskonsole;
- Fig. 11:: eine Rückansicht auf einen Auflieger mit einer Zwangsführung gemäß einer ersten Ausführungsform und einem Schwenkantrieb;
- Fig. 12:: eine Rückansicht auf einen Auflieger mit einer Zwangsführung gemäß einer zweiten Ausführungsform in Fahrstellung und
- Fig. 13:: eine Rückansicht auf einen Auflieger mit einer Zwangsführung gemäß einer zweiten Ausführungsform in Bedienstellung.

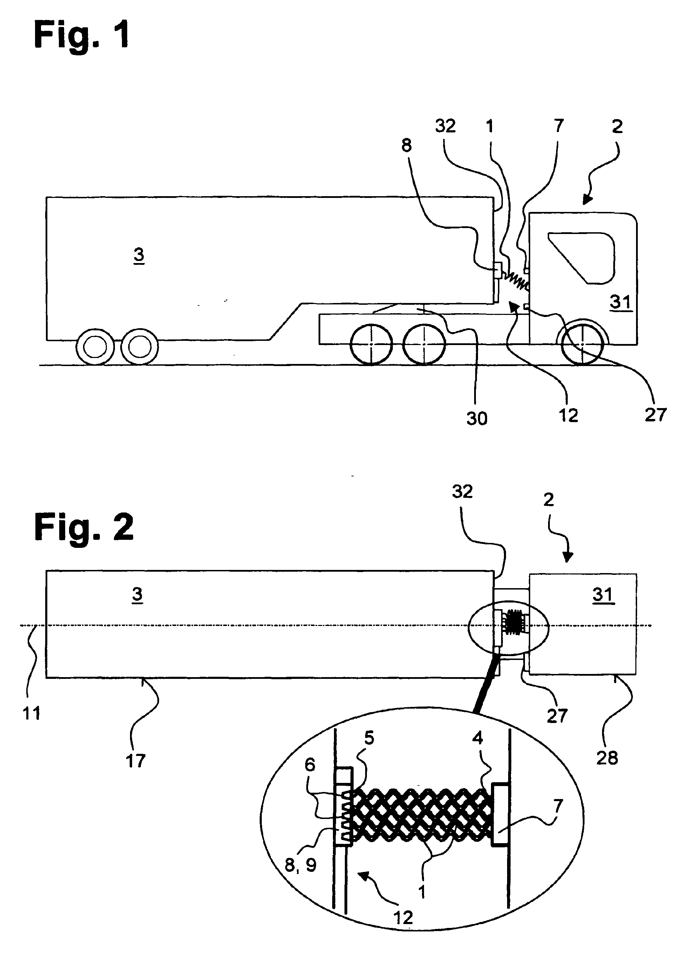

Die Figur 1 zeigt eine schematische Seitenansicht auf ein Zugfahrzeug 2 mit einem daran angekuppelten Auflieger 3 in einer fahrbereiten Stellung. Der Auflieger 3 ist über eine konventionelle Sattelkupplung 30 mit dem Zugfahrzeug 2 mechanisch verbunden. Zwischen dem Fahrerhaus 31 und der Vorderwand 32 des Aufliegers 3 verlaufen mehrere Versorgungsleitungen 1, von denen in der Seitenansicht der Figur 1 lediglich eine Versorgungsleitung 1 sichtbar ist. Bei den Versorgungsleitungen 1 handelt es sich sowohl um Druckluftleitungen als auch elektrische Leitungen.

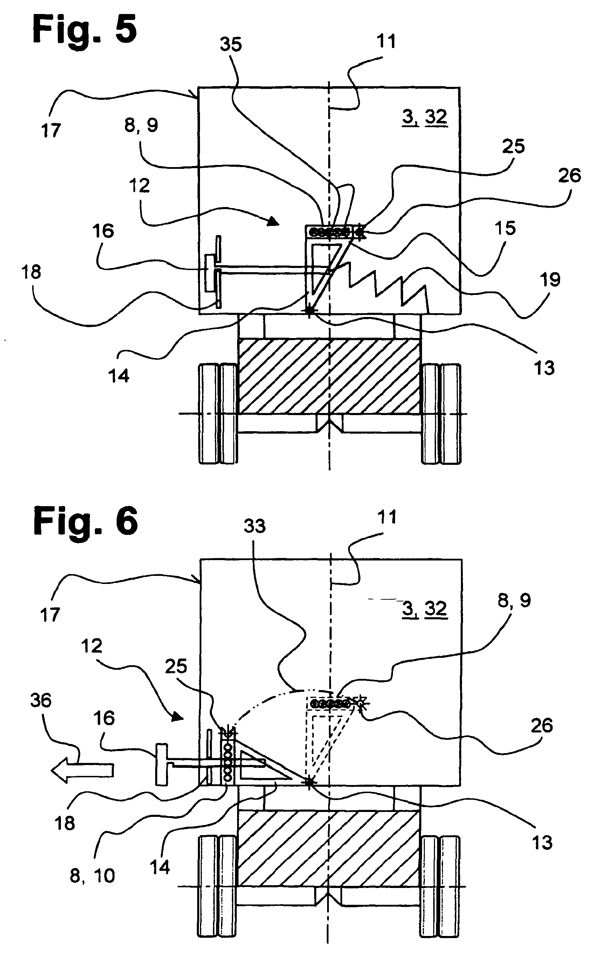

Die Versorgungsleitungen 1 treten auf der Rückseite des Fahrerhauses 31 unterhalb einer Ablagekonsole 7 hervor und sind an eine Versorgungskonsole 8 des Aufliegers 3 lösbar angesteckt. Die Versorgungskonsole 8 ist mit einer Zwangsführung 12 verbunden, auf die in den Figuren 5 bis 13 näher eingegangen wird.

Seitlich unterhalb der Ablagekonsole 7 ist eine zusätzliche Haltekonsole 27 angebracht, die in dem fahrbereiten Zustand von Zugfahrzeug 2 und Auflieger 3 mit verbundenen Versorgungsleitungen 1 unbenutzt bleibt.

Die seitlich versetzte Einbauposition der Haltekonsole 27 gegenüber der Ablagekonsole 7 ist besonders gut in der Draufsicht der Figur 2 zu erkennen. Darüber hinaus zeigt die Figur 2 in einem vergrößerten Ausschnitt die insgesamt fünf Versorgungsleitungen 1, die mit ihrem ersten Ende 4 unterhalb der ortsfest an dem Fahrerhaus 31 angeordneten Ablagekonsole 7 herauslaufen und mit ihrem zweiten Ende 5 jeweils mit einem Stecker 6 versehen sind. Die Stecker 6 sind alle in die Versorgungskonsole 8 angesteckt, wobei sich die Versorgungskonsole 8 in einem Bereich der Fahrzeuglängsachse 11 befindet, das heißt in einer Fahrstellung 9. Die Versorgungskonsole 8 steht hierbei unmittelbar der Ablagekonsole 7 gegenüber.

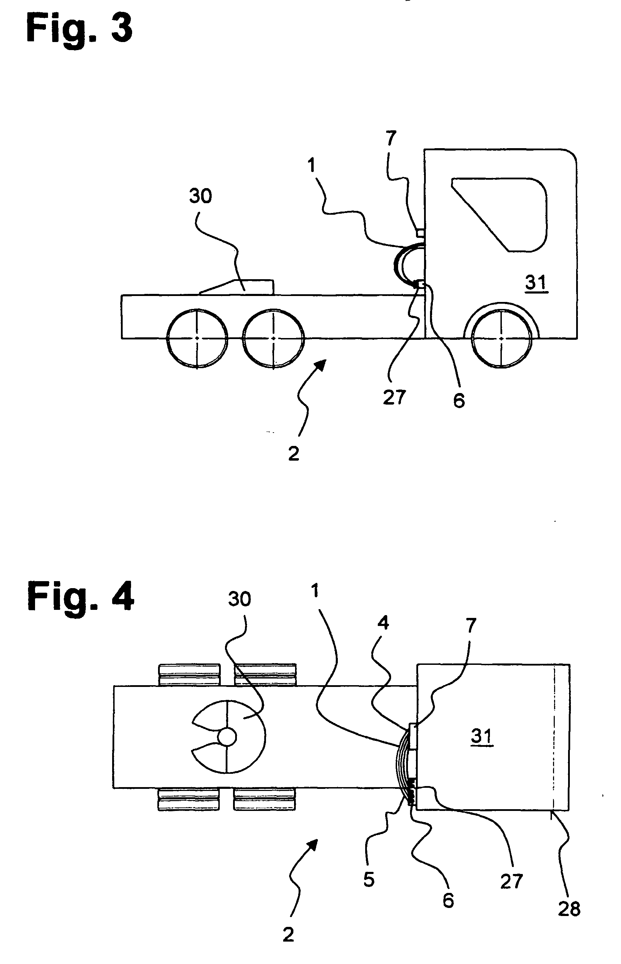

In den Figuren 3 und 4 ist das Zugfahrzeug 2 ohne Auflieger 3 gezeigt. Die Versorgungsleitungen 1 sind mit ihren Steckern 6 an die Haltekonsole 27 angesteckt und dadurch, sofern als nächstes ein Auflieger 3 mit einem erfindungsgemäßen Kupplungssystem aufgesattelt werden soll, von einem an einer Seite 28 neben dem Zugfahrzeug 2 stehenden Fahrer mühelos zu erreichen. In dieser Position bleibt die Ablagekonsole 7 unbenutzt.

Die Figur 5 zeigt eine Frontansicht auf einen Auflieger 3 mit einer daran angeordneten Zwangsführung 12 für die Versorgungskonsole 8 gemäß einer ersten Ausführungsform. Dabei befindet sich die Versorgungskonsole 8 in einer Fahrstellung 9.

Die gezeigte erste Ausführungsform umfasst einen Schwenkarm 14, der an seinem unteren Ende mit einem Schwenklager 13 an der Vorderwand 32 des Aufliegers 3 schwenkbar gelagert ist. Das Schwenklager 13 ist in räumlicher Nähe zu der Fahrzeuglängsachse 11 angeordnet. In der gezeigten Fahrstellung 9 der Versorgungskonsole 8 steht der Schwenkarm 14 im Wesentlichen senkrecht nach oben. Zur Versteifung weist der Schwenkarm 14 drei miteinander verbundene Schenkel auf, die in Form eines rechtwinkligen Dreiecks ausgerichtet sind. In der konstruktiven Ausgestaltung der Figur 5 befindet sich die Versorgungskonsole 8 auf der Seite der Gegenkathete an dem Ende 15 des Schwenkarmes 14. In der Versorgungskonsole 8 sind insgesamt fünf Steckeraufnahmen 35 vorgesehen, die symmetrisch in der Fahrzeuglängsachse 11 liegen.

An dem Schwenkarm 14 greift in einem mittleren Abschnitt sowohl eine Rückholfeder 19 als auch ein Zuggriff 16 an.

Der Zuggriff 16 ist in der Fahrstellung 9 der Versorgungskonsole 8 horizontal ausgerichtet, wobei das dem Schwenkarm 14 gegenüberliegende Ende in etwa mit einer Seite 17 des Aufliegers 3 abschließt. Ein Überstehen des Zuggriffes 16 in der Fahrstellung 9 ist aus Sicherheitsgründen nicht vorgesehen. Im Bereich der Seite 17 ist der Zuggriff 16 mit einer ortsfest an der Vorderwand 32 befestigten Zuggriffführung 18 gehalten.

Die Rückholfeder 19 ist mit dem Schwenkarm 14 gegenüberliegenden Ende an dem Auflieger 3 ortsfest fixiert und befindet sich in der Fahrstellung 9 in einer annähernd entspannten Stellung. Durch ein Ziehen an dem Zuggriff 16 wird der Schwenkarm 14 zusammen mit der daran befindlichen Versorgungskonsole 8 in Richtung der Seite 17 in eine Bedienstellung 10 geschwenkt. Diese ist in Figur 6 zu erkennen. Während des Schwenkvorganges baut sich kontinuierlich eine Rückstellkraft in der Rückholfeder 19 auf, die nach einem Verbinden der Versorgungsleitungen 1 (siehe Figur 1 und 2) ein definiertes Zurückholen des Schwenkarmes 14 aus der Bedienstellung 10 in die Fahrstellung 9 erleichtert. Als Rückholfeder 19 sind grundsätzlich alle Federelemente geeignet, wobei in der Ausführung der Figur 5 eine Schraubenfeder vorgeschlagen wird.

In der Fahrstellung 9 ist der Schwenkarm 14 mit der Versorgungskonsole 8 an dem Auflieger 3 verrastbar. Hierzu ist an der Versorgungskonsole 8 ein erstes V-förmiges Rastelement 25 ausgebildet, welches in der Fahrstellung 9 mit einem an der Vorderwand 32 angebrachten zapfenförmigen zweiten Rastelement 26 zusammenwirkt. Die Rastelemente 25, 26 sind sinnvoll, damit in der verrasteten Fahrstellung 9 der Schwenkarm 14 insbesondere bei Kurvenfahrten nicht unkontrolliert aufschwingt und es zu Beschädigungen oder einem vorzeitigen Verschleiß des Schwenklagers 13 kommt.

Die Figur 6 zeigt den Schwenkarm 14 in der um ca. 90 Grad geschwenkten Bedienstellung 10. Zum Erreichen der Bedienstellung 10 wurde der Zuggriff 16 in Zugrichtung 36 herausgezogen und dadurch die Versorgungskonsole 8 entsprechend des Schwenkweges 33 in Richtung der Seite 17 des Aufliegers 3 verfahren. Die Versorgungskonsole 8 befindet sich nunmehr in räumlicher Nähe zu der Zuggriffführung 18 und kann von einem neben dem Auflieger 3 stehenden Fahrer zum Einstecken der Stecker 6 (siehe Figur 2) erreicht werden. Der Schwenkarm 14 schließt in der Bedienstellung 10 nach unten mit der Vorderwand 32 des Aufliegers 3 ab.

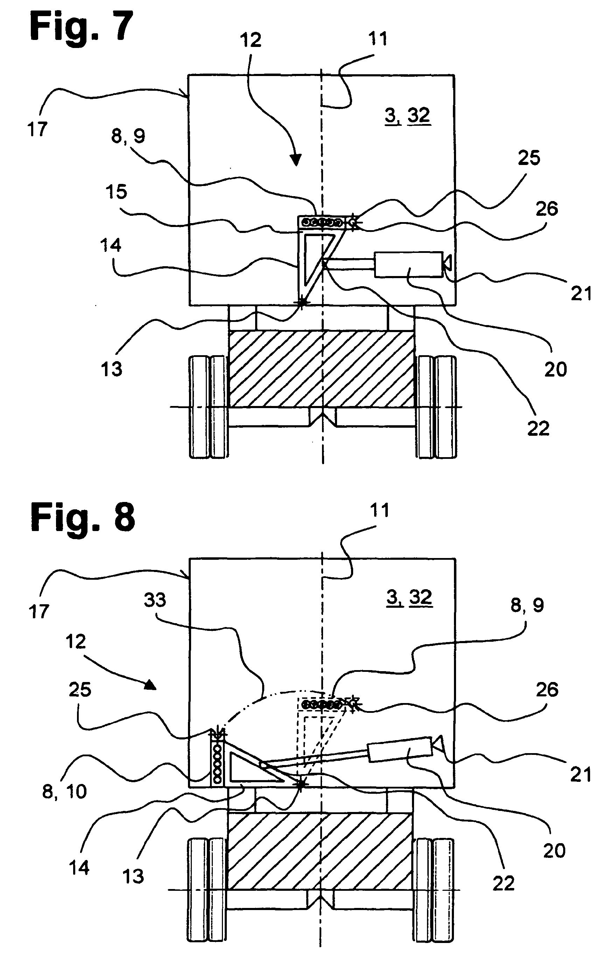

Die Figuren 7 und 8 zeigen in gleicher Ansicht wie die Figuren 5 und 6 eine alternative Ausführungsform der Erfindung mit einer identisch aufgebauten Zwangsführung 12, die jedoch anstelle einer Rückholfeder 19 einen Stellzylinder 20 aufweist. Der Stellzylinder 20 stützt sich mit seinem ersten Ende 21 an dem Auflieger 3 und mit seinem zweiten Ende 22 an dem Schwenkarm 14 ab.

In der Figur 7 befindet sich der Schwenkarm 14 mit der daran angeordneten Versorgungskonsole 8 in der Fahrstellung 9, in welcher das erste Rastelement 25 der Versorgungskonsole 8 das an der Vorderwand 32 angebrachte zweite Rastelement 26 teilweise umgreift. Der Stellzylinder 20 ist in der Fahrstellung 9 vollständig eingefahren und steht senkrecht zu der axialen Erstreckung des Schwenkarmes 14 beziehungsweise parallel zu der Unterseite der Vorderwand 32 des Aufliegers 3.

Zum Verfahren der Versorgungskonsole 8 in die in Figur 8 gezeigte Bedienstellung 10 wird der Stellzylinder 20 mit einem Fluid beaufschlagt und in seine Endstellung ausgefahren. Dadurch dreht die Versorgungskonsole 8 mit dem Schwenkarm 14 um das Schwenklager 13. Unter dem Begriff Fluid werden alle Flüssigkeiten, Dämpfe und Gase verstanden. Mit dem Erreichen der Bedienstellung 10 hat der Stellzylinder 20 um das erste Ende 21 und um das zweite Ende 22 geschwenkt. Die Versorgungskonsole 8 ist dabei entsprechend des angedeuteten Schwenkweges 33 um ca. 90 Grad verfahren worden und befindet sich auch bei dieser Ausführungsform in räumlicher Nähe zu der Seite 17 des Aufliegers 3.

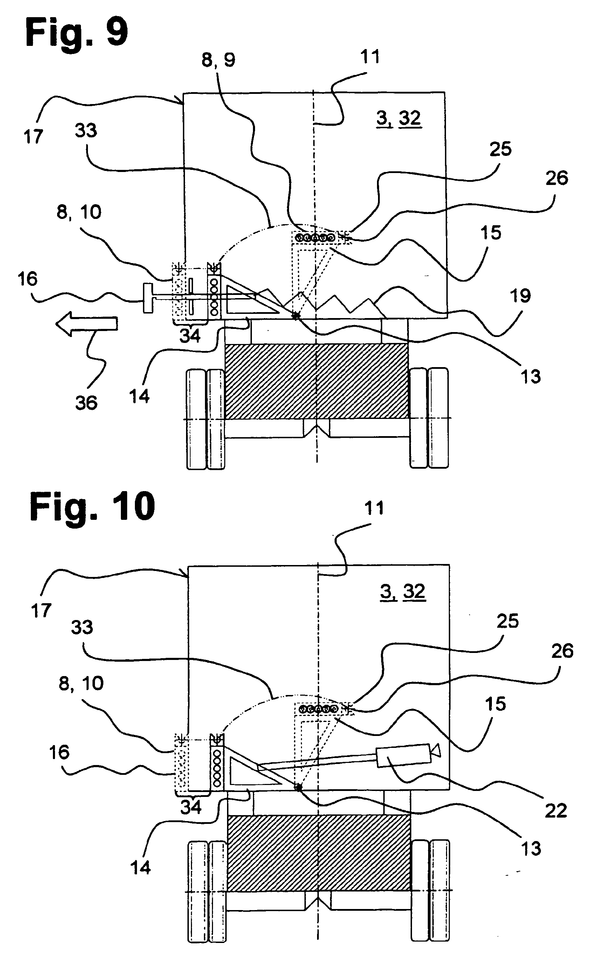

Die Figur 9 zeigt eine Ausführungsform entsprechend der Figuren 5 und 6 mit einer Rückstellfeder 19 und einem an dem Schwenkarm 14 angreifenden Zuggriff 16. Zusätzlich zu der reinen Schwenkbewegung auf dem Schwenkweg 33 ist es hierbei jedoch möglich, den Zuggriff 16 weiter in Zugrichtung 36 zu ziehen und dadurch die Versorgungskonsole 8 über die Seite 17 hinaus zu verfahren. Hierdurch legt die Versorgungskonsole 8 zusätzlich zu dem Schwenkweg 33 einen lateralen Verfahrweg 34 zurück und ist besonders günstig zum Anstecken der Stecker 6 (siehe Figur 2) von einer Position des Fahrers neben dem Auflieger 3 positioniert.

Dieser zusätzliche laterale Verfahrweg 34 kann auch mit einem Stellzylinder 20 realisiert werden, wie in Figur 10 gezeigt ist. Bei dieser Ausführungsform kann auf einen Zuggriff 16 verzichtet und der laterale Verfahrweg 34 allein durch ein weiteres Ausfahren des Stellzylinders 20 bewirkt werden.

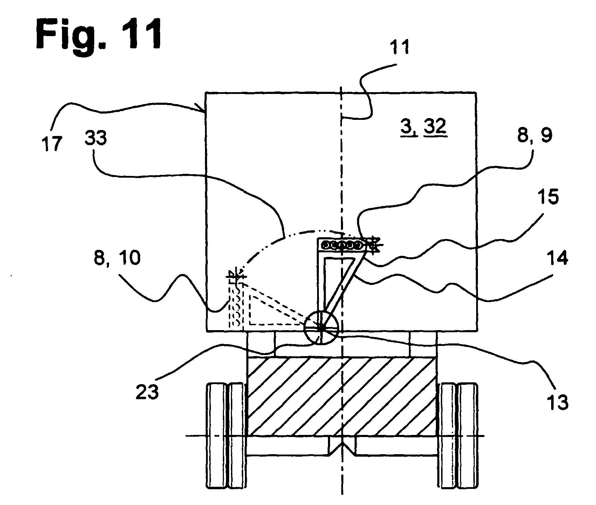

Die Figur 11 zeigt einen Schwenkarm 14 in Fahrstellung 9, der über einen im Bereich des Schwenklagers 13 angeordneten Schwenkantrieb 23 verfahren werden kann. Der Schwenkantrieb 23 umgibt koaxial das Schwenklager 13. Durch eine Inbetriebnahme des Schwenkantriebes 23 wird die Versorgungskonsole 8 in die gestrichelt gezeichnete Bedienstellung 10 geschwenkt.

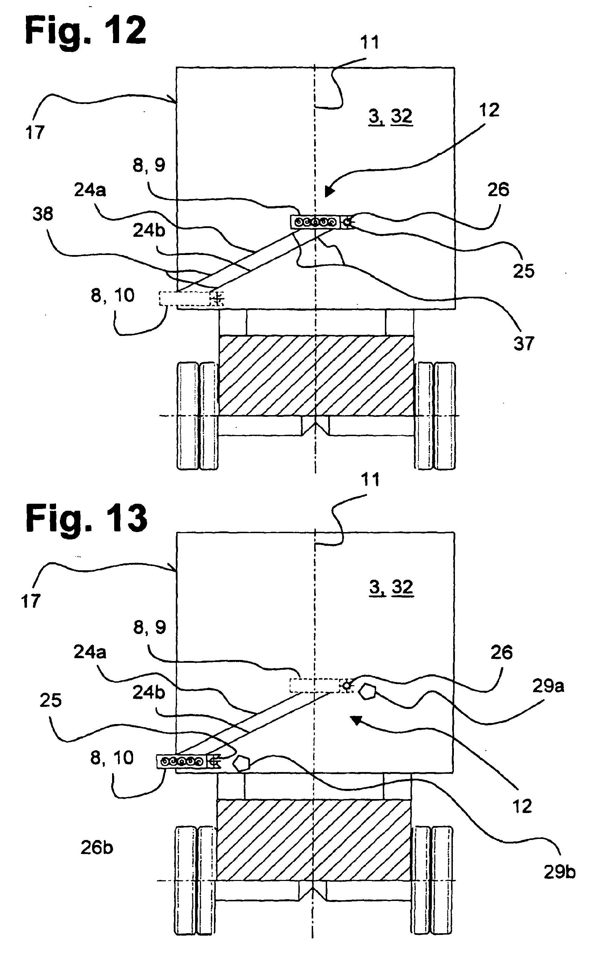

Die Figuren 12 und 13 stellen eine alternative Ausführungsform dar, die ohne einen Schwenkarm 14 auskommt. Die Zwangsführung 12 umfasst anstelle dessen zwei parallel zueinander ausgerichtete Gleitschienen 24a, 24b, die mit ihrem ersten Ende 37 jeweils auf einer Seite der Fahrzeuglängsachse und mit ihrem zweiten Ende 38 im Bereich der Seite 17 des Aufliegers 3 enden. Die Gleitschienen 24a, 24b sind ausgehend von der Fahrzeuglängsachse 11 zur Seite 17 schräg abfallend ausgerichtet. An den Gleitschienen 24a, 24b ist schlittenartig die Versorgungskonsole 8 verschiebbar geführt und kann aus einer mittigen Fahrstellung 9 in eine seitliche Bedienstellung 10 verfahren werden.

In der Figur 12 befindet sich die Versorgungskonsole 8 in der Fahrstellung 9. Mit Hilfe des an der Versorgungskonsole 8 angeordneten ersten Rastelementes 25 wird die Versorgungskonsole 8 an dem zweiten Rastelement 26 gehalten. Zum Verfahren der Versorgungskonsole 8 eignen sich sowohl Zuggriffe 16, Rückholfedern 19 als auch Stellzylinder 20, entsprechend der in den Figuren 5 bis 11 gezeigten Ausführungsformen, die in den Figuren 12 und 13 nicht dargestellt sind.

Die Figur 13 zeigt die Versorgungskonsole 8 in der Bedienstellung 10. Dabei überragt ein Teil der Versorgungskonsole 8 die Seite 17 des Aufliegers 3.

In der Figur 13 sind darüber hinaus Sensoren 29a, 29b zu erkennen, von denen der Sensor 29a die Fahrstellung 9 und der Sensor 29b die Bedienstellung 10 sensiert.

### Bezugszeichenliste

- 1: Versorgungsleitungen
- 2: Zugfahrzeug
- 3: Auflieger
- 4: erstes Ende Versorgungsleitung
- 5: zweites Ende Versorgungsleitung
- 6: Stecker
- 7: Ablagekonsole
- 8: Versorgungskonsole
- 9: Fahrstellung Versorgungskonsole
- 10: Bedienstellung Versorgungskonsole
- 11: Fahrzeuglängsachse
- 12: Zwangsführung Versorgungskonsole
- 13: Schwenklager
- 14: Schwenkarm
- 15: Ende Schwenkarm
- 16: Zuggriff
- 17: Seite Auflieger
- 18: Zuggriffführung
- 19: Rückholfeder
- 20: Stellzylinder
- 21: Erstes Ende Stellzylinder
- 22: Zweites Ende Stellzylinder
- 23: Schwenkantrieb
- 24a, 24b: Gleitschiene
- 25: Erstes Rastelement
- 26: Zweites Rastelement
- 27: Haltekonsole
- 28: Seite Zugfahrzeug
- 29a, 29b: Sensoren
- 30: Sattelkupplung
- 31: Fahrerhaus
- 32: Vorderwand Auflieger
- 33: Schwenkweg
- 34: Laterale Verfahrweg
- 35: Steckeraufnahme
- 36: Zugrichtung
- 37: erstes Ende Gleitschiene
- 38: zweites Ende Gleitschiene

## Patentansprüche

1. Kupplungssystem zum Verbinden von mindestens einer Versorgungsleitung (1) zwischen einem Zugfahrzeug (2) und einem Auflieger (3), wobei die mindestens eine Versorgungsleitung (1) mit ihrem ersten Ende (4) ortsfest an dem Zugfahrzeug (2) angeordnet ist und an ihrem zweiten Ende (5) einen Stecker (6) aufweist, umfassend mindestens eine an dem Zugfahrzeug (2) angeordnete Ablagekonsole (7), an welcher der mindestens eine Stecker (6) lösbar anbringbar ist, und eine an dem Auflieger (3) angeordnete Versorgungskonsole (8) zum Anschließen des mindestens einen Steckers (6) bei verbundenem Auflieger (3) und Zugfahrzeug (2),
**dadurch gekennzeichnet,**
**dass** die Versorgungskonsole (8) aus einer Fahrstellung (9) im Bereich der Fahrzeuglängsachse (11) in eine Bedienstellung (10) an einer Seite (17) des Aufliegers (3) verfahrbar ist.

2. Kupplungssystem nach Anspruch 1, **dadurch gekennzeichnet, dass** die Versorgungskonsole (8) mittels einer Zwangsführung (12) gelagert ist.

3. Kupplungssystem nach Anspruch 2, **dadurch gekennzeichnet, dass** die Zwangsführung (12) ein Schwenklager (13) und einen daran angreifenden Schwenkarm (14) umfasst, an dessen Ende (15) die Versorgungskonsole (8) angeordnet ist.

4. Kupplungssystem nach Anspruch 3, **dadurch gekennzeichnet, dass** an dem Schwenkarm (14) ein Zuggriff (16) angeordnet ist.

5. Kupplungssystem nach Anspruch 4, **dadurch gekennzeichnet, dass** der Zuggriff (16) in der Fahrstellung (9) von einer Seite (17) des Aufliegers (3) greifbar ist.

6. Kupplungssystem nach Anspruch 4 oder 5, **dadurch gekennzeichnet, dass** der Zuggriff (16) lateral verschiebbar in einer ortfest an dem Auflieger (3) angeordneten Zuggriffführung (18) gelagert ist.

7. Kupplungssystem nach einem der Ansprüche 4 bis 6, **dadurch gekennzeichnet, dass** der Zuggriff (16) an dem Schwenkarm (14) schwenkbar gelagert ist.

8. Kupplungssystem nach einem der Ansprüche 4 bis 7, **dadurch gekennzeichnet, dass** an dem Schwenkarm (14) und/oder dem Zuggriff (16) eine ortsfest an dem Auflieger (3) gelagerte Rückholfeder (19) angreift.

9. Kupplungssystem nach Anspruch 3, **dadurch gekennzeichnet, dass** an dem Schwenkarm (14) ein Stellzylinder (20) angreift.

10. Kupplungssystem nach Anspruch 9, **dadurch gekennzeichnet, dass** der Stellzylinder (20) mit seinem ersten Ende (21) schwenkbar an dem Auflieger (3) und mit seinem zweiten Ende (22) schwenkbar an dem Schwenkarm (14) gelagert ist.

11. Kupplungssystem nach Anspruch 3, **dadurch gekennzeichnet, dass** an dem Schwenkarm (14) ein Schwenkantrieb (23) angreift.

12. Kupplungssystem nach Anspruch 11, **dadurch gekennzeichnet, dass** der Schwenkantrieb (23) koaxial um das Schwenklager (13) angeordnet ist.

13. Kupplungssystem nach einem der Ansprüche 3 bis 12, **dadurch gekennzeichnet, dass** in der Bedienstellung (10) die Versorgungskonsole (8) und/oder der Schwenkarm (14) und/oder das Schwenklager (13) lateral verschiebbar ist.

14. Kupplungssystem nach Anspruch 2, **dadurch gekennzeichnet, dass** die Zwangsführung (12) mindestens eine Gleitschiene (24a, 24b) umfasst, auf welcher die Versorgungskonsole (8) verschiebbar angeordnet ist.

15. Kupplungssystem nach Anspruch 14, **dadurch gekennzeichnet, dass** die Gleitschiene (24a, 24b) sich aus einem Bereich der Fahrzeuglängsachse (11) bis zu einer Seite (17) des Aufliegers (3) erstreckt.

16. Kupplungssystem nach einem der Ansprüche 3-13 **dadurch gekennzeichnet, dass** die Versorgungskonsole (8) und/oder der Schwenkarm (14) mindestens ein erstes Rastelement (25) aufweist, das mit mindestens einem aufliegerseitigen zweiten Rastelement (26) zusammenwirkt.

17. Kupplungssystem nach einem der Ansprüche 1 bis 16, **dadurch gekennzeichnet, dass** die Ablagekonsole (7) auf dem Zugfahrzeug (2) außermittig angeordnet ist.

18. Kupplungssystem nach einem der Ansprüche 1 bis 16, **dadurch gekennzeichnet, dass** auf dem Zugfahrzeug (2) außermittig eine zusätzliche Haltekonsole (27) angeordnet ist.

19. Kupplungssystem nach Anspruch 17 oder 18, **dadurch gekennzeichnet, dass** die Ablagekonsole (7) oder die Haltekonsole (27) von einer Seite (28) des Zugfahrzeugs (2) greifbar ist.

20. Kupplungssystem nach einem der Ansprüche 1 bis 20, **dadurch gekennzeichnet, dass** die Fahrstellung (9) und/oder die Bedienstellung (10) mit Sensoren (29a, 29b) erkennbar ist.

## Claims

1. A coupling system for connecting at least one supply line (1) between a towing vehicle (2) and a trailer (3), wherein the at least one supply line (1) is arranged with its first end (4) immovably on the towing vehicle (2) and at its second end (5) has a plug connector (6), the coupling system comprising at least one storage bracket (7) arranged on the towing vehicle (2), on which storage bracket the at least one plug connector (6) is detachably mountable, and a supply bracket (8) arranged on the trailer (3) for attachment of the at least one plug connector (6) when the trailer (3) and the towing vehicle (2) are connected, **characterised in that** the supply bracket (8) is displaceable from a travelling position (9) in the region of the longitudinal axis (11) of the vehicle into an operating position (10) on one side (17) of the trailer (3).

2. A coupling system according to claim 1, **characterised in that** the supply bracket (8) is mounted by means of a positive guide (12).

3. A coupling system according to claim 2, **characterised in that** the positive guide (12) comprises a pivot bearing (13) and a pivot arm (14) acting thereon, at the end (15) of which the supply bracket (8) is arranged.

4. A coupling system according to claim 3, **characterised in that** a pull handle (16) is arranged on the pivot arm (14).

5. A coupling system according to claim 4, **characterised in that** in the travelling position (9) the pull handle (16) is readily accessible from one side (17) of the trailer (3).

6. A coupling system according to claim 4 or 5, **characterised in that** the pull handle (16) is mounted so as to be laterally slidable in a pull handle guide (18) immovably fixed on the trailer (3).

7. A coupling system according to any one of claims 4 to 6, **characterised in that** the pull handle (16) is pivotally mounted on the pivot arm (14).

8. A coupling system according to any one of claims 4 to 7, **characterised in that** a return spring (19) immovably fixed on the trailer (3) acts on the pivot arm (14) and/or on the pull handle (16).

9. A coupling system according to claim 3, **characterised in that** an actuating cylinder (20) acts on the pivot arm (14).

10. A coupling system according to claim 9, **characterised in that** the actuating cylinder (20) is pivotally mounted with its first end (21) on the trailer (3) and is pivotally mounted with its second end (22) on the pivot arm (14).

11. A coupling system according to claim 3, **characterised in that** a rotary actuator (23) acts on the pivot arm (14).

12. A coupling system according to claim 11, **characterised in that** the rotary actuator (23) is arranged coaxially around the pivot bearing (13).

13. A coupling system according to any one of claims 3 to 12, **characterised in that** in the operating position (10) the supply bracket (8) and/or the pivot arm (14) and/or the pivot bearing (13) is laterally displaceable.

14. A coupling system according to claim 2, **characterised in that** the positive guide (12) comprises at least one runner (24a, 24b) on which the supply bracket (8) is slidably arranged.

15. A coupling system according to claim 14, **characterised in that** the runner (24a, 24b) extends from a region of the longitudinal axis (11) of the vehicle to one side (17) of the trailer (3).

16. A coupling system according to any one of claims 3 to 13, **characterised in that** the supply bracket (8) and/or the pivot arm (14) comprises at least one first locking element (25), which co-operates with at least one second locking element (26) on the trailer.

17. A coupling system according to any one of claims 1 to 16, **characterised in that** the storage bracket (7) is arranged eccentrically on the towing vehicle (2).

18. A coupling system according to any one of claims 4 to 7, **characterised in that** an additional holding bracket (27) is arranged eccentrically on the towing vehicle (2).

19. A coupling system according to claim 17 or 18, **characterised in that** the storage bracket (7) or the holding bracket (27) is readily accessible from one side (28) of the towing vehicle (2).

20. A coupling system according to any one of claims 1 to 20, **characterised in that** the travelling position (9) and/or the operating position (10) is detectable by sensors (29a, 29b).

## Revendications

1. Système d'accouplement destiné à relier au moins une conduite d'alimentation (1) entre un véhicule tracteur (2) et une semi-remorque (3), la au moins une conduite d'alimentation (1) étant montée fixe par sa première extrémité (4) sur le véhicule tracteur (2) et comprenant sur sa seconde extrémité (5) un connecteur (6), comportant au moins une console de réception (7) disposée sur le véhicule tracteur (2), sur laquelle le au moins un connecteur (6) peut être aménagé de manière amovible, et une console d'alimentation (8) disposée sur la semi-remorque (3) destinée à raccorder le au moins un connecteur (6) lorsque la semi-remorque (3) et le véhicule tracteur (2) sont reliés l'un à l'autre,
**caractérisé en ce que**
la console d'alimentation (8) peut être déplacée d'une position de conduite (9) dans la zone de l'axe longitudinal du véhicule (11) dans une position de commande (10) sur un côté (17) de la semi-remorque (3).

2. Système d'accouplement selon la revendication 1, **caractérisé en ce que** la console d'alimentation (8) est logée au moyen d'un guidage forcé (12).

3. Système d'accouplement selon la revendication 2, **caractérisé en ce que** le guidage forcé (12) comporte un palier pivotant (13) et un bras pivotant (14) s'appliquant dessus, à l'extrémité (15) duquel est disposée la console d'alimentation (8).

4. Système d'accouplement selon la revendication 3, **caractérisé en ce qu'**une poignée de traction (16) est disposée sur le bras pivotant (14).

5. Système d'accouplement selon la revendication 4, **caractérisé en ce que** la poignée de traction (16) peut être amenée dans la position de conduite (9) depuis un côté (17) de la semi-remorque (3).

6. Système d'accouplement selon la revendication 4 ou 5, **caractérisé en ce que** la poignée de traction (16) est logée de manière à pouvoir être déplacée latéralement dans un guidage de poignée de traction (18) monté fixe sur la semi-remorque (3).

7. Système d'accouplement selon l'une quelconque des revendications 4 à 6, **caractérisé en ce que** la poignée de traction (16) est logée de manière à pouvoir pivoter sur le bras pivotant (14).

8. Système d'accouplement selon l'une quelconque des revendications 4 à 7, **caractérisé en ce qu'**un ressort de rappel (19) monté fixe sur la semi-remorque (3) s'applique contre le bras pivotant (14) et/ou la poignée de traction (16).

9. Système d'accouplement selon la revendication 3, **caractérisé en ce qu'**un cylindre de réglage (20) s'applique contre le bras pivotant (14).

10. Système d'accouplement selon la revendication 9, **caractérisé en ce que** le cylindre de réglage (20) est logé par sa première extrémité (21) de manière à pouvoir pivoter sur la semi-remorque (3) et par sa seconde extrémité (22) de manière à pouvoir pivoter sur le bras pivotant (14).

11. Système d'accouplement selon la revendication 3, **caractérisé en ce qu'**un entraînement pivotant (23) s'applique contre le bras pivotant (14).

12. Système d'accouplement selon la revendication 11, **caractérisé en ce que** l'entraînement pivotant (23) est disposé de manière coaxiale autour du palier pivotant (13).

13. Système d'accouplement selon l'une quelconque des revendications 3 à 12, **caractérisé en ce que** dans la position de commande (10), la console d'alimentation (8) et/ou le bras pivotant (14) et/ou le palier pivotant (13) peuvent se déplacer latéralement.

14. Système d'accouplement selon la revendication 2, **caractérisé en ce que** le guidage forcé (12) comporte au moins une glissière (24a, 24b) sur laquelle la console d'alimentation (8) est disposée de manière mobile.

15. Système d'accouplement selon la revendication 14, **caractérisé en ce que** la glissière (24a, 24b) s'étend depuis une zone de l'axe longitudinal du véhicule (11) jusqu'à un côté (17) de la semi-remorque (3).

16. Système d'accouplement selon l'une quelconque des revendications 3 à 13, **caractérisé en ce que** la console d'alimentation (8) et/ou le bras pivotant (14) comprennent au moins un premier élément d'encliquetage (25), qui coopère avec au moins un second élément d'encliquetage (26) côté semi-remorque.

17. Système d'accouplement selon l'une quelconque des revendications 1 à 16, **caractérisé en ce que** la console de réception (7) est disposée de façon excentrée sur le véhicule tracteur (2).

18. Système d'accouplement selon l'une quelconque des revendications 1 à 16, **caractérisé en ce qu'**une console de retenue (27) additionnelle est disposée de manière excentrée sur le véhicule tracteur (2).

19. Système d'accouplement selon la revendication 17 ou 18, **caractérisé en ce que** la console de réception (7) ou la console de retenue (27) peut être saisie depuis un côté (28) du véhicule tracteur (2).

20. Système d'accouplement selon l'une quelconque des revendications 1 à 20, **caractérisé en ce que** la position de conduite (9) et/ou la position de commande (10) peut être détectée avec des capteurs (29a, 29b).
